# EUROPEAN PATENT APPLICATION

(11) **EP 2 538 623 A1**
(43) Date of publication of application: **26.12.2012**
(21) Application number: 12173146.7
(22) Date of filing: 22.06.2012
(51) Int. Cl.: H04L 12/56, H04L 29/06

(54) **Detecting phishing attempt from packets marked by network nodes**

(30) Priority: 24.06.2011 EP 11171283
(71) Applicant: Koninklijke KPN N.V., 2516 CK The Hague (NL)
(72) Inventor: Steenbergen, van, Ate, 9737 NN Groningen (NL); Keijzer, Herman, 9727 DN Groningen (NL)
(74) Representative: Wuyts, Koenraad Maria

(57) **Abstract**

A service is provided to an end-user of a first data communication device when receiving via a data network a plurality of data packets from a second data communication device. At least a particular data packet has been marked with node attribute data by one or more network nodes. The attribute data is indicative of a path of the data packet across the data network. An identifier, as declared by the second device is determined and correlated with one or more reference identifiers registered in advance. If there is a correlation, the node attribute data is correlated with reference attribute data registered in advance as associated with the reference identifier. If there is a discrepancy between the node attribute data and the reference attribute data, an alert is issued.

## Description

### FIELD OF THE INVENTION

The invention relates to a method of providing a service to an end-user of a first data communication system configured for receiving a data packet via a data communication network. The invention also relates to a first data communication system, to a data processing system configured for acting on behalf of the first data processing system, to first control software for installing on a data communication system, and to further control software for installing on a data processing system.

### BACKGROUND ART

The expression "IP address spoofing" is well known in the art and refers to the use of a forged source address in the header of IP (Internet Protocol) data packets instead of the actual source address, so as to conceal an identity of the computer system sending the IP data packets. IP address spoofing is typically being used in phishing. The term "phishing", also well known in the art, refers to attempts to acquire sensitive information, e.g., credit card details, passwords, personal information, etc., from an unsuspecting individual by means of sending to the individual an electronic communication, e.g., an email, an IM (Instant Messaging) message, an SMS (Short Message Service) message, an IRC (Internet Relay Chat) message, etc. The source address as received by the individual is spoofed, i.e., is forged to look as the source address of a trusted party, e.g., a financial institution such as a bank with which the individual has an account, an Internet store such as Amazon, or an auction site such as eBay. For more background on phishing and defense mechanisms see, e.g., "The Phishing Guide: Understanding & Preventing Phishing Attacks", Gunter Ollmann, NGSSoftware Insight Security Research, Sept. 2004.

The spoofing of an email address is fairly simple. The spoofing may involve, e.g., configuring the settings of the spoofer's email application. An example of such a setting is the name, ("display name") in the "From"-field or "Sender"-field of an outgoing email in order to show to the recipient a name or an email address that is different from the name of the sender or different from the email address allocated by an Internet Service Provider (ISP) to the data communication device of the spoofer from which the email was actually sent. Another example of such a setting is the email address as will be displayed in the email header of the email when received by the recipient. The text body of the email or of the SMS message may then include, for example, a hyperlink on which the individual is supposed to click after having read the instructions in the text body. The visual representation of the hyperlink, viewed in a user-interface of the individual's data communication device, is formed by an underlined string of alpha-numerical characters that seems to correspond to a URL (Uniform Resource Locator) of the web site of the trusted party. However, the URL is spoofed and clicking on the hyperlink causes the individual to enter a malicious web site, masquerading as the web site of the trusted party and persuading the individual to interact with the malicious web site and provide the sensitive information.

The term "Pharming" refers to the exploiting of well known flaws in DNS (Domain Name System) services and the way wherein host names are resolved to IP addresses, using e.g., DNS hijacking, DNS spoofing or cache poisoning, in order to alter the DNS resolution information that a client needs to resolve and to consequently reach an organization's on-line services. For more background information see, e.g., "The Pharming Guide: Understanding & Preventing DNS-related Attacks by Phishers", Gunter Ollmann, , NGSSoftware Insight Security Research, July 2005.

Caller-ID spoofing relates to causing the display of a telephone of a called party to display a telephone number that is not the one of the telephone of the calling party. Technologies for Caller-ID spoofing have been known from before the advent of VoIP (Voice over IP) telephony. The term "Vishing" is used to refer to the exploiting of VoIP for phishing purposes. The term "vishing" stems from the combination of "voice" and "phishing". For more information see, for example, "The Vishing Guide", a white paper by Gunter Ollman, dated Nov.15, 2007, WindowsSecurity.com, TechGenix Ltd.

### SUMMARY OF THE INVENTION

Accordingly, phishing involves manipulating the operation of the sending data communication system of the malicious party and interfering with the operation of the receiving data communication system of an unsuspecting end-user. The inventors have recognized that it is rather difficult for a malicious party to manipulate the operation of nodes on the data network via which the malicious party's data communication system sends data packets to the data communication system of the unsuspecting end-user. Examples of such nodes include routers or gateways on the data network, and wired access points or wireless access points such as base stations of a mobile network, giving access to the data network.

The inventors therefore propose to use the nodes in order to mark the data packets with attribute data that is representative of the route taken through the data network. The attribute data is compared with reference attribute data representative of the declared origin of the data communication as received. The comparison is carried out at, or on behalf of, the data processing system of the receiver. If the comparison gives rise to a discrepancy, an alert is issued to, e.g., the receiver, to signify that the data communication is suspect and may need further investigation.

More specifically, the inventors propose a method of providing a service to an end-user of a first data communication system. The first data communication system comprises, e.g., e.g., a personal computer (PC), a personal digital assistant (PDA), a mobile telephone, a smartphone, etc. The first data communication system is configured for receiving a plurality of data packets from a second data communication system in a data communication session via a data network. The second data communication system comprises, e.g., a server, another personal computer (PC), another personal digital assistant (PDA), another mobile telephone, another smartphone, etc. At least a particular one of the plurality of data packets has been marked with specific node attribute data indicative of at least a specific one of one or more nodes of the data network on a path of the particular data packet across the data network from the second data communication system to the first data communication system. The method comprises determining whether or not there is a correlation between, on the one hand, a declared identifier in at least a certain one of the data packets from the second data communication system and declared for identifying the second data communication system and, on the other hand, a reference identifier registered in advance; if there is a correlation, determining if there is a discrepancy between the specific node attribute data and reference attribute data; and issuing an alert if the discrepancy is present.

The reference attribute data is, e.g., registered in advance as associated with the reference identifier, or is generated upon receipt of the certain data packet at the first data communication system or on behalf of the first data communication system. Examples of such reference attribute data are discussed further below.

As to generating the reference attribute data upon the receipt of the certain data packet at the first data communication system, the first data communication may have been configured to time-stamp the data packets upon receipt. The time stamps may later on be used as reference attribute data as will be explained further below.

As to generating the reference attribute data upon the receipt of the certain data packet on behalf of the first data communication system, consider an email server or a voice mail server. Within the context of an email server or a voice mail server, the data packets sent by the second data communication system to the first data communication system may get stored, at least temporarily, at the email server or at the voice mail server in case the first data communication system is unavailable for receiving the data packets. The email server or the voice mail server may time-stamp the data packets when received at the email server or at the voice mail server. The time stamps may later on be used as reference attribute data as will be explained further below.

The alert may be provided to the end-user of the first data communication system, for example, via a visible or audible warning in the user interface of the first data processing system. In addition, the alert may also be provided in a message to a party controlling another data communication system that has been registered as legitimately using the reference identifier as an address on the data network. The party that is legitimately using the registered identifier may have a vested interest in barring others from masquerading as the legitimate party with respect to the user of the first data communication system. Upon the discrepancy, the first data processing system may use the registered identifier to automatically notify the legitimate party of the discrepancy. In addition, the alert may also be given in a message to still another party that acts on behalf of the end-user of the first data communication system such as an Internet service provider (ISP), or an email service provider, or a telecommunications service provider. This other party may then take action, for example, use IP traceback in order to discover the true identity of the second data communication system. The method may be carried out on behalf of the first data communication system by a server at the ISP, the at the email service provider and/or at the telecommunications service provider. Alternatively, or in addition, the method may be carried out by the end-user's first data communication system after having been configured for this task.

For example, the data communication session comprises the communication of an email from the second data communication system to the first data communication system. The sender's name and email address, as presented in the user-interface of the first data communication system upon receipt of the email, have been spoofed, as briefly discussed above. The declared identifier of the origin, e.g., the name and/or the email address of the sender as declared in the "From"-field or in the "Reply-to"-field in the header of the email, may then give a false impression of being of a trusted source. The declared identifier masquerades as having originated at, e.g., a bank with which the end-user has a checking account or a credit card company that has issued a credit card to the end-user, whereas the email was actually sent by a malicious person involved in a phishing scheme.

As another example, the data communication session involves the downloading of a web page by the first data communication system via the data network from the second data communication system that acts as a server. The end-user of the first data communication system is lured into clicking on a hyperlink given in the text body of an email or of a mobile text message such as an SMS. The hyperlink then serves as the declared identifier of the origin of a web page that can be reached by clicking the hyperlink. The string of alphanumeric characters representing the URL in the hyperlink rendered in the user-interface of the first data communication system, as well as the look-and-feel of the web page downloaded as a result of clinking the hyperlink, may give the impression to the end-user that the web page originated with a trusted party, e.g., the bank with which the end-user has a checking account or the credit card company that has issued a credit card to the end-user. The URL may, however, been spoofed and the web page thus downloaded may have been configured for intercepting passwords or other sensitive data entered by the end-user in response to entries required to proceed with the service, e.g., Internet banking, expected by the end-user in his/her interaction with the downloaded web page. The spoofed URL may have appeared in the text body of an email with a spoofed email address of the sender displayed in the header as mentioned above. Alternatively, the spoofed URL may have been created locally at the first data communication system of the unsuspecting end-user as a result of a modification of the hosts file implemented by a computer virus.

As yet another example, the data communication session involves the second data communication system of the malicious party making a telephone call to the first data communication system of the unsuspecting end-user via IP telephony (e.g., VoIP). The Caller-ID of the second data communication system is presented in the user-interface of the first data communication system. The Caller-ID can be spoofed or masked. IP-telephony also provides the capability to use proxies in order to route data communication traffic internationally, so as to be able to obfuscate the true origin of the telephone call. The Caller-ID as presented in the user-interface of the first data communication system then serves as the declared identifier.

Accordingly, the declared identifier (email address, display name, URL, Caller-ID, etc.) may have been configured to appear to the end-user, at first glance, as stemming from a reputable source. The declared identifier as presented in the user-interface therefore includes one or more human-perceptible, semantically meaningful indications fabricated for the purpose of convincing the end-user that the declared identifier and, therefore, the data communication, stems from the reputable source. Examples of such indications are, e.g., the name of the reputable source in the domain name of an email address (i.e., the name of the reputable source in the part that comes after the "@" character); the name of the reputable source in the domain name of a URL, the area code in the Caller-ID as displayed to the called party, etc.

In the invention, the declared identifier (the declared email address, the declared display name, the declared URL, the declared Caller-ID, etc.) is determined, and a correlation is sought between the declared identifier and a reference identifier (a reference email address, a reference display name, a reference URL, a reference Caller-ID, etc) registered or stored in a database in advance. For example, part of the display name in the header of the email or part of the alphanumerical string representing a URL in the text body of the email may look semantically similar to an alphanumerical expression in a reference display name registered advance or in a reference URL registered in advance. The similarity may be complete, i.e., the part of the display name in the header of the email, or the part of the URL in the text body of the email, is identical to the alphanumerical expression in the reference display name or in the reference URL. The similarity may be incomplete in the sense that the part of the display name in the header of the email, or the part of the URL in the text body of the email, differs from the alphanumerical expression in the reference display name or in the reference URL by only one or a few alphanumerical characters.

For completeness it is remarked here that the domain name in the URL is not sensitive to using a lower case character or an upper case character, whereas the part of the URL coming after the domain name (e.g., a path or query string) is case-sensitive. A path specifies a unique location within a file system and points to such location by following a directory tree hierarchy expressed in a string of characters wherein path components, separated by a delimiting character, represent each directory. A query string is the part of the URL that contains data to be passed from a client's web browser to a web application which in turn generates the web page to be downloaded. Also note that a text string, which represents a URL, is typically created in Unicode. Unicode is a standard used in the computing industry for the encoding, representation and processing of text. The text string representing the URL of a web page is displayed in the address bar of a browser if the web page has been downloaded or is displayed in a hover-over status bar if a cursor is moved over the hyperlink link of the URL as displayed in the browser's frame. Some text characters may have the same visual appearance when being displayed in the address bar or in the status bar, whereas the text characters have different Unicode representations. For example, a URL may be represented in the address bar and in the status bar as *www,paypal,com,* but a Unicode character has been substituted for the second "a" in the term "paypal" that looks like the letter "a" as used in common written English, but is not an "a". The modified "paypal" expression thus leads a visitor to a fake web site that has all the appearance of the legitimate paypal web site. This example is discussed in the item "Unicode URL Hack", posted Feb. 16, 2005, in "Schneier on Security", a blog kept by Bruce Schneier on security and security technology").

If there is a correlation between the declared identifier and the reference identifier according to some pre-determined criterion, the specific node attribute data of the particular data packet is determined, as well as reference attribute data that was registered in advance as associated with the reference identifier.

Then, it is determined whether or not there is a discrepancy between the specific node attribute data and the reference attribute data.

In an embodiment of a method according to the invention, the specific node attribute data comprises a first indication of a first geographic location associated with the specific node. The reference attribute data is registered in advance and comprises a second indication of one or more second geographic location associated with a further data communication system registered as associated with the reference identifier. The determining of whether or not the discrepancy is present comprises determining if the first geographic location, on the one hand, and the one or more second geographic locations, on the other hand, correlate according to a first predetermined criterion.

In this embodiment, the specific node attribute data is representative of the first geographic location of the specific node, e.g., a specific geographic region, country or state, or longitude and latitude of the first geographic location of the specific node. The second geographic location, as registered, is representative of, e.g., a further geographic location of an origin of further data packets received by the end-user via the data network in one or more past data communication sessions with a further data communication system corresponding to the reference identifier. If it is unlikely, according to a predetermined criterion, that the specific node was traversed by the particular data packet if the particular data packet originated at the origin according to the registered reference attribute data, given the first geographic location of the specific node, it is determined that there is a discrepancy and an alert is issued, e.g., to the end-user.

For example, the declared identifier resembles a reference identifier of a bank with which the end-user of the first data communication system holds a checking account. The reference attribute data indicates that the bank's server is located in a certain city in a certain country. The end-user's first data communication system may be a PC at home or a smartphone that the end-user uses while travelling abroad. The path of a data packet across the data network between the bank's server and the end-user lies roughly in a geographic area that includes the city as well as the geographic position of the end-user's first data communication system at the time of the current data communication session. This is a result of the relatively high geographic density of routers (number of routers per square mile) at least in developed countries. The geographic area that includes the city and the current geographic position of the first data communication system is characterized by, e.g., a geographical distance between the city and the current position of the first data communication system. If the first geographic location of the specific node, as given by the specific node attribute data, is much farther away from the current geographic position of the first data communication system than the city, there is arguably a discrepancy on the basis of which an alert may be issued..

Alternatively, respective ones of multiple second geographic locations, as registered, are representative of the respective specific geographic locations of respective ones of multiple specific nodes on the data network that were marking the further data packets ultimately received via the network by the first data communication system from the further data communication system corresponding to the reference identifier in past data communication sessions. That is, the second geographic locations characterize the geographic regions traversed by the further data packets received from the further data communication system in past data communication sessions. If it is unlikely, according to a predetermined criterion, that the first geographic locations in the markings of the one or more particular data packets match the second geographic locations as registered in advance, it is determined that there is a discrepancy and an alert is issued, e.g., to the end-user.

Consider again above example, wherein the declared identifier resembles the reference identifier of the bank with which the end-user of the first data communication system holds a checking account. The bank's server is located in a certain city in a certain country. The end-user's first data communication system may be a PC at home or a smartphone that the end-user uses while travelling abroad. As discussed above, the path of a data packet across the data network between the bank's server and the end-user lies roughly within a geographic area that includes the city as well as the geographic position of the end-user's first data communication system at the time of the current data communication session. The geographic area is roughly characterized by a geographical distance between the city and the current geographic position of the end-user's first data communication system. If the first geographic location of the specific node, as given by the specific node attribute data, is much farther away from the current geographic position of the first data communication system than any of the nodes of the data network that reside within the geographic area, there is arguably a discrepancy on the basis of which an alert may be issued..

In a further embodiment of a method according to the invention, the specific node attribute data comprises a third indication of a first time of the day at a specific geographic location of the specific node when the specific node marked the particular data packet. The reference attribute data comprises a fourth indication of a second time of the day of receipt of the data packet at the first data communication system or at a server receiving the data packet on behalf of the first data communication system. The determining of the discrepancy comprises determining if the first time of the day correlates with the second time of the day according to a second predetermined criterion.

In above further embodiment, the specific node attribute data is representative of the local time of the day at the first geographic location of the specific node, e.g., the local time on which the specific node was marking the particular data packet. The marking then comprises timestamping the particular data packet.

Consider again above example, wherein the declared identifier resembles the reference identifier of the bank with which the end-user of the first data communication system holds a checking account. Assume that the data communication is an email that looks as if it has originated with the bank. The bank's server is located in a certain city in a certain country. The end-user's first data communication system may be a PC at home or a smartphone that the end-user uses while travelling abroad. An email typically carries indications of date and time in several header fields see, e.g., RFC 2822, section 3.3 "Date and Time Specification". RFC 2822 relates to a standard for specifying a syntax for text messages that are sent between computer users, within the framework of "electronic mail" messages. The temporal indications in the header fields include: day of the month and time of the day of sending the email, and day of the month and time of the day of receipt of the email. The indications of the day and time of sending are added by the sending email server, and the other indications of the day and time of receipt are added by the receiving email server. Consider the time, elapsed between the sending and the receipt of the email according to the temporal indications. Assume that the elapsed time is significantly shorter than an expected duration of the time period between the sending of an email by the bank and the receiving of the email by the receiving email server. The expected duration can be determined on the basis of, e.g., a history log of individual times elapsed between the sending of individual emails by the bank and receipt thereof by the receiving email server. The significantly shorter length of the elapsed time may indicate that there is a discrepancy. Note that a significantly longer length of the elapsed time may be due to unknown buffers on the path of the email between the sender and receiver, and may not be a reliable sign of there being a discrepancy. Alternatively, the expected duration may be based on a shortest geographic distance between the bank's server and the end-user's email server. The expected duration can then not be shorter than the geographic distance divided by the speed of light. As an alterative, one could take a typical length of a delay per unit of geographic distance, e.g., the typical delay per 100 km. The expected duration should then not be shorter than the product of, on the one hand, the number of such units in the shortest geographic distance between the bank's server and the end-user's email server and, on the other hand, the typical length of the delay per unit of geographic distance.

In a further embodiment of a method according to the invention, the specific node attribute data is registered in advance and comprises a fifth indication of a first topology of the path of the particular data packet across the data network. the reference attribute data comprises a sixth indication of one or more further topologies of one or more further paths across the data network taken during one or more past data communication session with a further data communication system registered as associated with the reference identifier. The determining if the discrepancy is present comprises determining if the first topology and the one or more further topologies correlate according to a third predetermined criterion.

The term "topology" as used above refers to a characteristic of a path across the data network that relates to the identity of the path based on the path's nodes that have been traversed by the particular data packet. Each specific node of the data network is unique with respect to its specific position relative to the positions of the other nodes of the data network. Each specific path across the data network is therefore also unique as it is characterized by the interlinked nodes traversed by the particular data packet. Accordingly, paths can be compared to one another in order to determine a commonality or a difference based on their number of interlinked nodes, or on the relative positions of their interlinked nodes, etc. For example, each specific path can be assigned a specific length based on the specific number of interlinked nodes that form the specific path. As another example, a distance may be assigned to a pair of paths. The quantity "distance between a pair of paths" may be determined on the basis of, for example, the minimum number of other, intermediate nodes that lie between a particular node on one of the paths and the other one of the paths and that need to be traversed if one were to travel from one path to the other one, or the average of the minimum numbers of intermediate nodes taken over all particular nodes of the one path.

For example, the specific node attribute data is representative of identities of multiple specific nodes signifying a specific topology of the path across the data network, and the reference attribute data is representative of further identifies of multiple further specific nodes signifying further topologies of a further paths across the data network that were used in past data communication sessions between the first data communication system and the further data communication system associated with the reference identifier. Assume that there is no commonality between, on the one hand, the specific topology as determined from the specific node attribute data and, on the other hand, the further topologies as determined from the reference attribute data. For example, there is no commonality if the path has significantly more hops or significantly fewer hops than any of the further paths according to some predetermined criterion.

As another example, assume that the first halves of the further paths have a certain number of nodes in common. Considering only sections at the beginnings of the further paths takes into account that the first data communication system of the end-user may be a mobile system that is used while the end-user is travelling. The sections at the ends of the further paths may vary significantly when different data communication sessions are conducted with the end-user at different places. There is no commonality if the first half of the path, on the one hand, and any of the first halves of the further paths, on the other hand, have only a few nodes or even none in common. It may then be determined that there is a discrepancy on the basis of which an alert is issued. Alternatively, one could divide the path in respective sections of subsequent nodes of the path, and compare the sections with, e.g., the most commonly used paths known in advance, or with, e.g., a history log of legitimate paths used in the past. For example, data originating in the US and sent to a user in the Netherlands is typically routed via, e.g., London and Amsterdam; data originating in the Asia and sent to a user in the Netherlands is typically routed via, e.g., Istanbul, Paris and Amsterdam or Moscow, Berlin and Amsterdam. A data packet originating in the US but apparently having been routed via Moscow may give rise to a discrepancy.

Accordingly, the specific node attribute data and the reference attribute data may be representative of temporal information and/or locational information and/or topological information. A discrepancy between the specific node attribute data and the reference attribute data is present according to some further predetermined criterion, if there is an unacceptably large dissimilarity in the temporal information and/or locational information and/or topological information. Note that the determining of whether or not there is a discrepancy present, may involve processing the temporal information as well as the locational information as well as the topological information of the specific node attribute data and the reference attribute data, and that the conclusion may be drawn that a discrepancy is present if there is an inconsistency in at least the temporal information or the locational information or the topological information.

If the first data communication system comprises a mobile data communication device, e.g., a smartphone, the geographic location of the mobile data communication device may vary widely. As a result, the routes of data packets received in the past at the smartphone from the further data communication system using the reference identifier may vary widely as well. In order to determine the presence of the discrepancy, it may therefore be advisable in a mobile scenario to use the locational information and/or temporal information instead of the topological information.

The invention further relates to a first data communication system, configured for receiving a plurality of data packets from a second data communication system in a data communication session via a data network. At least a particular one of the plurality of data packets has been marked with specific node attribute data indicative of at least a specific one of one or more nodes of the data network on a path of the particular data packet across the data network from the second data communication system to the first data communication system. The first data communication system is configured for: determining whether or not there is a correlation between, on the one hand, a declared identifier in at least a certain one of the data packets from the second data communication system and declared for identifying the second data communication system and, on the other hand, a reference identifier registered in advance; if there is a correlation, determining if there is a discrepancy between the specific node attribute data and reference attribute data; and issuing an alert if the discrepancy is present.

The first data communication system comprises, e.g., a consumer-electronics device with data network communication capabilities such as a laptop PC or a smartphone. The first data communication system of the invention is configured to issue an alert in case a discrepancy is noted between the specific node attribute data and the reference attribute data, as specified in the methods discussed above.

The invention also relates to first control software on a computer-readable medium. The first control software is configured for being installed on a data processing system of a first data communication system in order to render the first data communication system operative to carry out a method of the invention as discussed above. The first data communication system is configured for receiving a plurality of data packets from a second data communication system in a data communication session via a data network. At least a particular one of the plurality of data packets has been marked with specific node attribute data indicative of at least a specific one of one or more nodes of the data network on a path of the particular data packet across the data network from the second data communication system to the first data communication system. The first control software comprises: first instructions for determining a declared identifier in at least a certain one of the data packets from the second data communication system for identifying the second data communication system as declared; second instructions for determining whether or not there is a correlation between the declared identifier and a reference identifier registered in advance; third instructions for determining the specific node attribute data of the particular data packet; fourth instructions for determining reference attribute if there is a correlation; fifth instructions for determining if there is a discrepancy between the specific node attribute data and the reference attribute data; and sixth instructions for issuing an alert if the discrepancy is present.

The invention also relates to a server on a data network, wherein the server is configured for providing a service to an end-user of a first data communication system. The first data communication system is configured for receiving a plurality of data packets from a second data communication system in a data communication session via the data network. At least a particular one of the plurality of data packets has been marked with specific node attribute data indicative of at least a specific one of one or more nodes of the data network on a path of the particular data packet across the data network from the second data communication system to the first data communication system. The server is configured for: determining whether or not there is a correlation between, on the one hand, a declared identifier in at least a certain one of the data packets from the second data communication system and declared for identifying the second data communication system and, on the other hand, a reference identifier registered in advance; if there is a correlation, determining if there is a discrepancy between the specific node attribute data and reference attribute data; and issuing an alert if the discrepancy is present.

The server is operated by, e.g., an Internet service provider, an email service provider, a telecommunications service provider, etc. The determining of the discrepancy and the issuing of the alert is now delegated to the server.

The invention also relates to second control software on a computer-readable medium. The second control software is configured for being installed on a server connected to a data network for rendering the server operative to carry out a process according to a method of the invention and to provide a service to an end-user of a first data communication system. The first data communication system is configured for receiving a plurality of data packets from a second data communication system in a data communication session via a data network. At least a particular one of the plurality of data packets has been marked with specific node attribute data indicative of at least a specific one of one or more nodes of the data network on a path of the particular data packet across the data network from the second data communication system to the first data communication system. The second control software comprises: seventh instructions for determining a declared identifier in at least a certain one of the data packets from the second data communication system for identifying the second data communication system as declared; eighth instructions for determining whether or not there is a correlation between the declared identifier and a reference identifier registered in advance; ninth instructions for determining the specific node attribute data of the particular data packet; tenth instructions for determining reference attribute data if there is a correlation; eleventh instructions for determining if there is a discrepancy between the specific node attribute data and the reference attribute data; and twelfth instructions for issuing an alert if the discrepancy is present.

In the invention, one or more particular ones of the nodes are configured to mark the passing data packets. The marking may be done by using, e.g., the option field in the TCP segment of an IP datagram, an option field in the header of an IP datagram, a pseudo-header in UDP (User Datagram Protocol) segment of an IP datagram, a combination of the option field in the TCP segment and the option field in the IP datagram, a combination of the pseudo-header in the UDP segment and the option field in the IP datagram, a pseudo-header preceding the TCP segment, a pseudo-header preceding the IP datagram etc. A pseudo-header is an additional header that precedes the actual header but does not form part of the actual protocol.

Different ones of the data packets of the same data communication session may be marked by different ones of the nodes, or a single data packet may be marked by two or more nodes.

For completeness, it is remarked here that the marking of data packets by network nodes is known in the art. For example, consider IP traceback in the field of data communication via a data network. The expression "IP traceback" refers to techniques for determining the origin of a data packet. IP traceback is relevant to, among other things, identifying the origins of denial-of service (DoS) attacks, or the actual source behind IP address spoofing, and to identifying the parties involved in other violations in the use of Internet services, so as to hold the perpetrator accountable. A DoS attack is a malicious attempt to render a network resource unavailable to its legitimate users. A DoS attack on a network resource, e.g., a server, may include crashing the services provided by the server by means of disrupting the configuration information or the state information, or by means of triggering errors. A DoS attack may also include flooding the server with communication requests so as to fully occupy the server's computational resources.

There are two main methods known to implement IP traceback. A first technique is packet marking and a second technique is packet logging. See, e.g., "IP Traceback based on Packet Marking and Logging", Chao Gong and Kamil Sarac, Proc. ICC 2005, pp. 1043-1047. In packet marking, specific ones, or all, of the routers along the path of a data packet from the source through a data network to the destination, write specific information in each data packet that passes through the specific router. The specific information is representative of the specific router. As a result, the path of the data packet can be recovered on the basis of the identity of the routers, even in case the IP address of the attacker was spoofed. In packet logging, a specific router monitors data packets and locally stores copies of particular data packets, or records information about the particular data packets, that pass that specific router. The recorded information enables to verify whether the particular data packets were received via a pre-determined other router. The logging also enables to reconstruct the path of the particular data packets.

US patent application publication 20070157314, incorporated herein by reference, discloses a method for tracing-back an IP data packet using marking information of a router stored on a hop-by-hop option header, which is one of IPv6 extension headers. According to the method, an attack made by an attacker is detected on the IPv6 network. If the attack is detected, information is extracted, stored on a hop-by-hop option header of a data packet received through the IPv6 network and marked by a router through which the packet has passed. After that, a reception path of the received packet is reconstructed and an IP of the attacker is back-traced using the extracted marking information. US patent application publication 20070157314 also discusses IP traceback on an IPv4 network. A data packet is transmitted by an attacker to a victim's host via a plurality of routers. When the data packet is being sent to the victim's host via the plurality of routers, each respective one of the plurality of routers marks a respective IP address of the respective router itself on a changeable field, e.g., an identification (ID) field contained in an IP header of the data packet

### BRIEF DESCRIPTION OF THE DRAWING

The invention is explained in further detail, by way of example and with reference to the accompanying drawing, wherein:
Fig.1 is a diagram of a data network;
Fig.2 is a diagram illustrating data encapsulation;
Fig.3 is a diagram illustrating a header of a TCP segment;
Fig.4 is a diagram illustrating a header of an IP datagram;
Fig.5 is a diagram illustrating a method according to the invention;
Fig.6 is a diagram of a first data processing system of the end-user;
Fig.7 is a diagram of a server acting on behalf of the first data processing system;
Fig.8 is a diagram of a hybrid system implementing a method according to the invention; and
Fig.9 is a diagram of a further hybrid system implementing a method according to the invention.

Throughout the Figures, similar or corresponding features are indicated by same reference numerals.

### DETAILED EMBODIMENTS

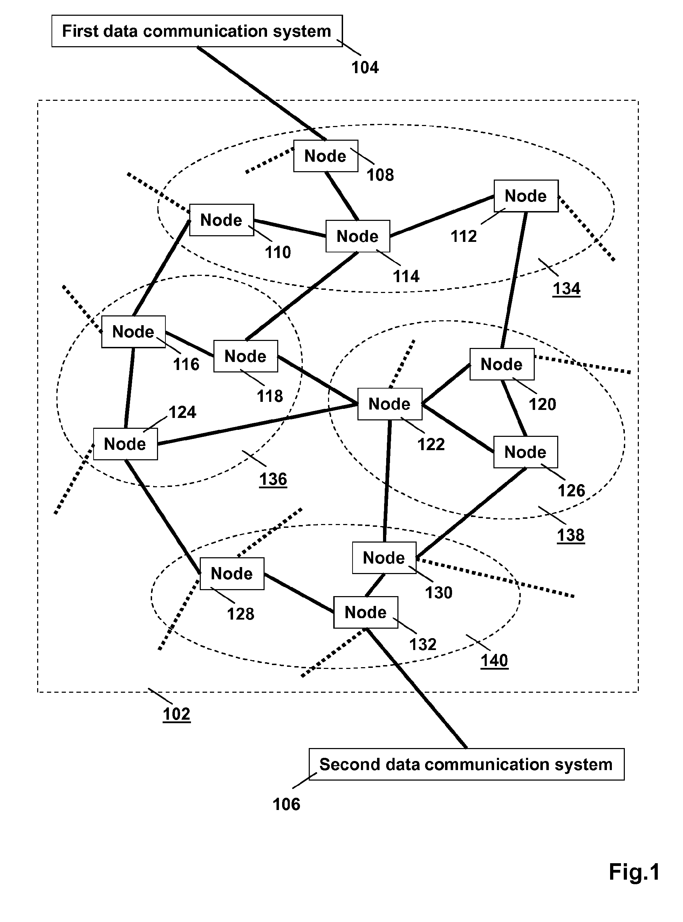

Fig.1 is a diagram of a data network 102, e.g., the Internet, that connects a first data communication system 104 and a second data communication system 106 in a data communication session between the first data communication system 104 and the second data communication system 106. The first data communication system 104 is configured for receiving a plurality of data packets from the second data communication system 106 via the data network 102 during the data communication session.

The data network 102 is formed by a plurality of interconnected network nodes, e.g., a first node 108, a second node 110, a third node 112, a fourth node 114, a fifth node 116, a sixth node 118, a seventh node 120, an eighth node 122, a ninth node 124, a tenth node 126, an eleventh node 128, a twelfth node 130 and a thirteenth node 132. The first node 108 is a first network access point for providing the first data communication system 104 wired or wireless access to the data network 102, and the thirteenth node 132 is a second access point for providing the second data communication system 106 wired or wireless access to the data network 102. For example, the first node 108 comprises first equipment of a first Internet Service Provider (ISP) or a first telecommunications service provider, and the thirteenth node 132 comprises second equipment of a second ISP or of a second telecommunications service provider.

Each of the second node 110, the third node 112, the fourth node 114, the fifth node 116, the sixth node 118, the seventh node 120, the eighth node 122, the ninth node 124, the tenth node 126, the eleventh node 128 and the twelfth node 130 includes, e.g., a router, a network bridge or a gateway.

During the data communication session between the first data processing system 104 and the second data processing system 106, a plurality of data packets is sent from the second data processing system 106 via the data network 102 to the first data processing system 104. Each specific one of the plurality of data packets follows a specific path across the data network 102. The expression "a specific path" as used herein refers to the set of hops traversed by the specific data packet between the second data processing system 106 and the first data processing system 104. The term "hop" refers to a link between two successive ones of the first node 108, the second node 110, the third node 112, the fourth node 114, the fifth node 116, the sixth node 118, the seventh node 120, the eighth node 122, the ninth node 124, the tenth node 126, the eleventh node 128, the twelfth node 130 and the thirteenth node 132, on the specific path.

The specific path taken by the specific data packet across the data network 102 depends on, among other things, the routing protocols of the relevant nodes receiving the specific data packet, and the particular routing policies adhered to by particular sub-networks of the data network 102 formed by the nodes. The expression "particular sub-network" refers to a particular collection of nodes of the data network 102. The particular collection of nodes is controlled by a particular authority or by a particular operator, and the particular authority or operator specifies the particular routing policy adhered to by the particular sub-network. In the example shown, the data network 102 comprises a first sub-network 134, a second sub-network 136, a third sub-network 138 and a fourth sub-network 140. The first sub-network 134 comprises the first node 108, the second node 110, the third node 112 and the fourth node 114. The second sub-network 136 comprises the fifth node 116, the sixth node 118 and the ninth node 124. The third sub-network 138 comprises the seventh node 120, the eighth node 122 and the tenth node 126. The fourth sub-network 140 comprises the eleventh node 128, the twelfth node 130 and the thirteenth node 132. Different ones of the first sub-network 134, the second sub-network 136, the third sub-network 138 and the fourth sub-network 140 may cover different geographic regions.

The first node 108, the second node 110, the third node 112, the fourth node 114, the fifth node 116, the sixth node 118, the seventh node 120, the eighth node 122, the ninth node 124, the tenth node 126, the eleventh node 128, the twelfth node 130 and the thirteenth node 132, the associated routing protocols and the routing policies are typically not under control of a first end-user of the first data communication system 104, or of a second end-user of the second data communication system 106. That is, none of these nodes can easily get manipulated by the first end-user or the second end-user, and the operation of none of these nodes can get easily reconfigured by the first end-user or the second end-user.

One or more specific ones of the first node 108, the second node 110, the third node 112, the fourth node 114, the fifth node 116, the sixth node 118, the seventh node 120, the eighth node 122, the ninth node 124, the tenth node 126, the eleventh node 128, the twelfth node 130 and the thirteenth node 132 have been configured to mark data packets that pass through the specific node or through the specific nodes on the path of the data packets across the data network 102. The specific node marks the data packets passing through it by means of adding specific node attribute data. The specific node attribute data is indicative of the specific node, and enables to identify a geographic location of the specific node, e.g., a country or state wherein the specific node is located, a geographic area wherein the specific node is located, or a geographic position of the specific node in terms of, for example, latitude and longitude.

In order to illustrate the marking, the TCP/IP networking model is discussed briefly below. The acronym "IP" stands for the Internet Protocol, which is the principal communications protocol used for relaying data packets across a data network using the IP Suite. IP is responsible for routing packets across data network boundaries, and is the primary protocol that establishes the Internet. The acronym "TCP" stands for "Transmission Control Protocol", which is one of the core protocols of the IP Suite.

As well known in the art, data communication between the first data communication system 104 and the second data communication system 106 via the data network 102 typically uses a modular protocol stack of different communication protocols. The modularity of the protocol stack enables to abstract logically separate functions in the data network from the underlying implementations in the networking model being used. An example of such a modular networking model is the TCP/IP Suite of hierarchical protocols. In a hierarchical protocol stack, an entity of data at a specific level in the protocol stack is encapsulated as a payload into another entity of data at a next lower level in the protocol stack. The expression "entity of data" as used herein refers to a basic unit of data transferred at the relevant level in the hierarchical protocol stack. Typically, encapsulation at the next lower level involves encapsulating the entity of data, received from the preceding level, and adding a header. The header comprises control information for use in the protocol of this next lower level.

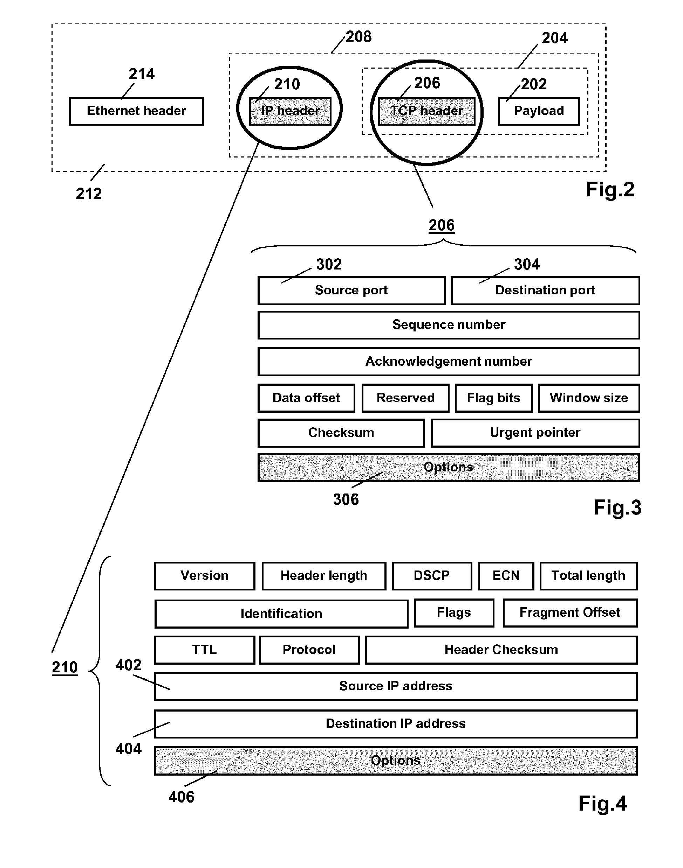

Reference is now made to Figs.2, 3 and 4.

In the TCP/IP networking model, consider an Application Layer, a Transport Layer, an Internet Layer and a Network Access Layer. Assume that a software application at the second data communication system 106 creates data 202 that the second data communication system 106 intends to communicate via the data network 102 to the first data communication system 104.

The data 202 created by the software application at the second data communication system 106 is the data at the Application Layer. This data 202 is also being referred to as the "message" and forms the payload of the units of data handled at the next layers of the TCP/IP networking model.

The message is formatted at the Transport Layer to establish host-to-host connectivity. The Transport Layer controls the aspects of the data transmission across the data network 102 that are independent of the specific format of the message and that are independent of the logistics of communicating across the data network 102. The Transport Layer establishes a basic data communication channel for the communication of the message from the second data communication system 106 to the first data communication system 104. The concept of a "port" is introduced at the Transport Layer in order to enable to allocate a specific data communication channel. The unit of data handled at the Transport Layer is typically referred to as a "segment" if the Transport Layer uses the TCP protocol, or as a "datagram" if the Transport Layer uses the UDP protocol. In the example of Fig.2, the unit of data handled at the level of the Transport Layer is a TCP segment 204. The formatting of the message 202 at the level of the Transport Layer involves adding a TCP header 206. The TCP header 206 comprises control information for use in the TCP protocol, as will be discussed in more detail below.

The TCP segment 204 is formatted at the Internet Layer to form a datagram 208, typically using the IP protocol. The datagram 208 at the Internet Layer is the unit of data that is transported across the data communication network 102 from the second data communication system 106 to the first data communication system 104. The formatting of the TCP segment 204 to form the datagram 208 involves adding an IP header 210. The IP header 210 comprises control information for control of the processing of the datagram in the IP protocol.

The datagram 208 of the Internet Layer is formatted at the Network Access Layer for accessing the physical implementation of the data network 102. The Network Access Layer contains the specifications relating to the transmission of data over a physical network. The term "Network Access Protocol" is also used to collectively refer to the set of data link layer protocols and physical layer protocols of the OSI (Open Systems Interconnection) networking model. The datagram 208 is formatted at the Network Access Layer so as to form a unit of data referred to as a frame 212. The frame 212 is converted to a string of bits that is then transmitted across the data network 102 from the second data communication system 106 to the first data communication system 104. The formatting of the datagram 208 to form the frame 212 involves adding a header 214 specific to the protocol used at the Network Access Layer. In the example shown, the protocol used at the Network Access Layer is an Ethernet protocol, and the header 214 is an Ethernet header that comprises control information for controlling the processing of the frame 212 at the level of the Network Access Layer.

Fig.3 is a diagram of the TCP header 206 in more detail, showing a plurality of fields in the TCP header 206, specified in handbooks and standardized as known in the art. For example, a source port field 302 indicates the port related to the software application in progress on the second data communication system 106, and a destination port 304 indicates another port related to another software application running on the first data communication system 104. The TCP header 206 also has an option field 306. Other fields in the diagram the TCP header 206 of Fig.3 are not separately indicated with reference numerals in order to not obscure the drawing.

Fig.4 is a diagram of the IP header 210 in more detail, showing a plurality of fields in the IP header 210, specified in handbooks and standardized as known in the art. For example, a source IP address field 402 indicates the sender of the IP datagram 208, and a destination IP address field 404 indicates the receiver of the IP datagram 208. Note that the source IP address may be changed in transit by a network address translation (NAT) device, or may be spoofed, as discussed above. The IP header 210 also has an options field 406. Other fields in the diagram of the IP header 210 of Fig.4 are not separately indicated with reference numerals in order to not obscure the drawing. The acronym "'DSCP" in the diagram of Fig.4 stands for "Differentiated Services Code Point" and is defined by RFC 2474 for packet classification purposes. The acronym "'ECN" in the diagram of Fig.4 stands for "Explicit Congestion Notification" and is defined by RFC 3168 for end-to-end notification of network congestion. The acronym "TTL" in the diagram of Fig.4 stands for "Time-To-Live" and specifies the limited lifetime of the IP datagram 208, as a result of which the IP datagram 208 does not persist on the data network 102.

Accordingly, the TCP segment header 206 and/or the IP datagram header 210, and possibly other headers at other layers of the encapsulation process, include fields that may be optionally used to mark the frame 212 with specific node attribute data. As mentioned above, the marking of data packets by routers is used for IP traceback and is discussed in, e.g., "IP Traceback based on Packet Marking and Logging", Chao Gong and Kamil Sarac, Proc. ICC 2005, pp. 1043-1047.

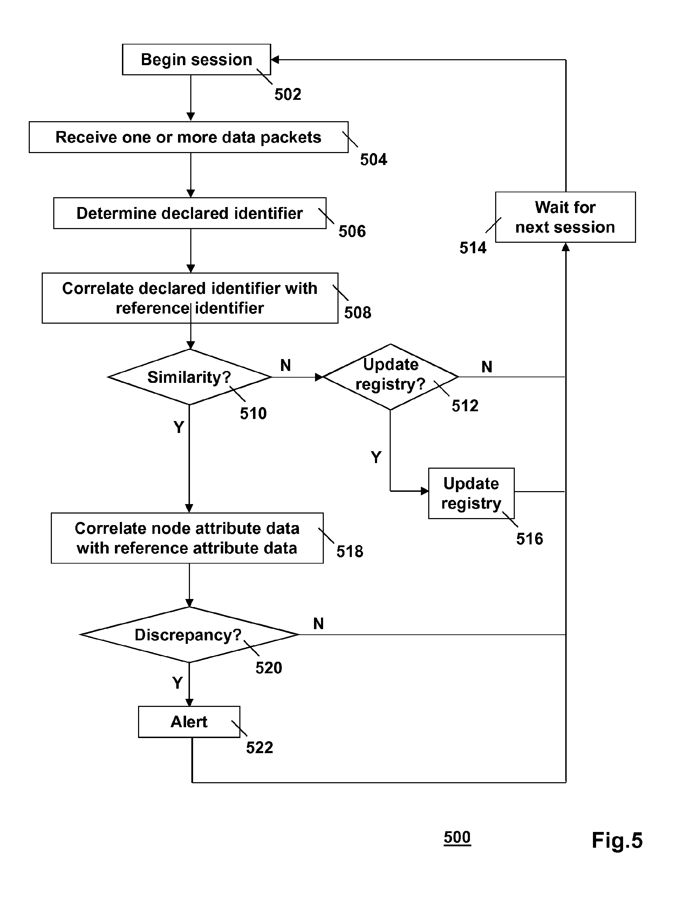

Fig.5 is a diagram of a process 500 illustrating an example of a method according to the invention, of providing a service to the end-user of the first data communication system 102.

In the first step 502 of the method, a communication session starts between the first data communication system 104 and the second data communication system 106 and conducted via the data network 102.

In a second step 504, the first data communication system 104 receives a plurality of data packets from the second data communication system 106 via the data network 102. At least a particular one of the plurality of data packets has been marked by one or more specific nodes of the data network 102. The one or more specific nodes are positioned on a path of the particular data packet across the data network 102 from the second data communication system 106 to the first data communication system 104. The marking has been explained above. The marking by a specific one of the nodes on the path comprises adding specific node attribute data to the particular data packet. The specific node attribute data is indicative of the specific node in the data network 102 on the path of the particular data packet across the data network 102. The specific node attribute data enables to identify a geographic location of the specific node.

In a third step 506, a declared identifier is determined in at least a certain one of the data packets from the second data communication system 106 for determining an identity of the second data communication system 106 as declared. As discussed earlier, the declared identifier is an email address or a display name in a "From"-filed in an email header, a URL in a hyperlink embedded in a text body of an email, a Caller-ID appearing in a graphical user interface of a telephone apparatus, etc. The declared identifier is found based on the associated labels or tags present in the electronic mark-up language in the electronic message formed by the data packets received from the second data communication system 106. As known, there is presentational markup language, procedural markup language and descriptive markup language involved in the processing of an electronic message. For example, the declared identifier can be determined by means of directly analyzing the sequence of IP data of the data communication session, or by means of an extension to a device driver or to the web protocol used as a result of which the declared identifier becomes visible in the user agent string. As to the user agent string: a client application, which implements a network protocol for use in communicating data via a data network to a receiving peer, is typically referred to as a "user agent". The user agent identifies itself, its application type, its operating system, etc., by submitting a characteristic identification string to the receiving peer. The receiving peer uses the characteristic identification string to characterize the sending client and, optionally, to select suitable content parameters or suitable operating parameters for the data communication session. In the protocols of, e.g., HTTP (Hypertext Transfer Protocol), SIP (Session Initiation Protocol), SMTP (Simple Mail Transfer Protocol) and NNTP (Network News Transfer Protocol), the characteristic identification string is transmitted in a header field, called "User-Agent". In HTTP, the "User-Agent" string is part of the HTTP-header. The user agent string can be spoofed of cloaked.

In a fourth step 508, the declared identifier is compared with one or more reference identifiers stored in advance in a registry. The stored reference identifiers are trusted identifiers. Each specific one of the trusted identifiers was registered on one or more previous occasions for previous data communication sessions that were conducted between the first data processing system 104 and a specific trusted source. Alternatively, or in addition, the registry with reference identifiers has been provided by a trusted supplier. The registry contains per reference identifier reference attribute data, e.g., a geographical attribute of the source, or a characterization of typical paths from a specific data communication system controlled by a specific trusted party across the data network 102.

In a fifth step 510, it is determined whether or not there is a match between the declared identifier and a particular reference identifier stored in the registry in advance. The matching is based on one or more criterions in order to determine a degree of resemblance between the declared identifier and the reference identifier. If no match has been found in the fifth step 510, the process 500 proceeds to a sixth step 512.

In the sixth step 512, it is determined whether or not the registry is to be updated by storing the declared identifier as a new reference identifier, together with the specific node attribute data now becoming new reference attribute data and/or with additional attribute data that the end-user or the service provider may have obtained from a source other than the specific node attribute data. If it is decided in the sixth step 512 that the registry is not to be updated, the process 500 proceeds with a seventh step 514.

In the seventh step 514, the process 500 is considered completed as far as the current data communication session is concerned, and the process 500 waits for a next data communication session. If the next data communication session starts, the process 500 returns to the first step 502.

If it is decided in the sixth step 512 that the registry is to be updated, the process 500 proceeds with an eighth step 516.

In the eighth step 516, the registry is updated, as mentioned above, and the process 500 proceeds with the seventh step 514, discussed above.

If it is decided in the fifth step 510 that there is a match between the declared identifier and a particular reference identifier stored in advance in the registry, the process 500 continues with a ninth step 518.

In the ninth step 518, the specific node attribute data is correlated with the reference attribute data. Examples of temporal information, locational information and topological information have been discussed earlier.

In a tenth step 520, it is determined whether or not the correlation of the ninth step 518 gives rise to a discrepancy between the specific node attribute data and the reference attribute data. If there is no discrepancy found in the tenth step 520, the process 500 continues with the seventh step 514, discussed above. If a discrepancy has been found in the tenth step 520, the process 500 proceeds with an eleventh step 522.

In the eleventh step 522, an alert is issued in order to alert, e.g., the end-user of the first data processing system 102, or the ISP, or the party legitimately using the particular reference identifier, to the discrepancy. The end-user may then proceed with the data communication session or with acting on the electronic message with caution, and abort the data communication session or the acting, if so desired.

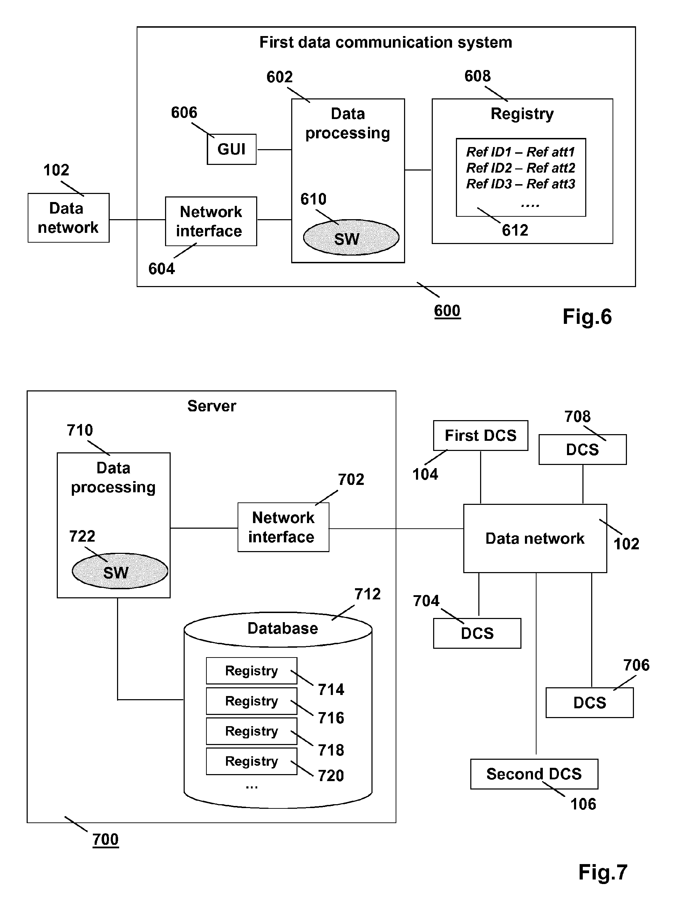

Fig.6 is a diagram of an embodiment 600 of the first data communication system 104, configured for carrying out the process 500 illustrated in the diagram of Fig.5. The embodiment 600 of the first data communication system 104 comprises a first data processing system 602, a data network interface 604 for connection to the data network 102, a graphical user interface 606, and a registry 608. The first data processing system 602 controls operation of the data network interface 604, the graphical user interface 606, and the registry 608. The controlling capability of the first data processing system 602 is implemented, for example, by means of first control software 610. The registry 608 comprises a data structure 612 stored on a computer-readable medium. According to a definition from the IEEE (Institute of Electrical and Electronic Engineers), a data structure is a physical or logical relationship among data elements, designed to support specific data processing functions. A data element is a named unit of data, comprising one or more data components. The data structure 612 comprises one or more of the reference identifiers and one or more of the reference attribute data. Each respective one of the reference identifiers is related to a respective one of the reference attribute data. The first data processing system 602 determines the declared identifier, the specific node attribute data, and uses the information stored in the registry 608 to determine if there is a discrepancy, as explained above.

Fig.7 is a diagram of a server 700 on the data network 102 and connected thereto via a further network interface 702. The server 700 is run by, e.g., an ISP, an email service provider, a telecommunications service provider, etc. The server 700 is configured for carrying out the process 500, illustrated in the diagram of Fig.5, on behalf of a population of end-users of data communications systems, among which are the first data communication system 104, a third data communication system 704, a fourth data communication system 706 and a fifth data communication system 708. That is, the data communication on the data network 102 to or from any of the population of data communication systems that has registered with the server 700 goes via the server 700. In the diagram of Fig.7, the acronym "DCS" stands for "data communication system".

The server 700 comprises a second data processing system 710, and a database 712. The database 712 comprises a first registry 714, a second registry 716, a third registry 718 and a fourth registry 720. The first registry 714 comprises a first data structure (not shown separately) with one or more of reference identifiers and one or more of reference attribute data. Each respective one of the reference attribute data in the first registry 714 is related to a respective one of the reference identifiers in the first registry 714. The reference identifiers and the reference attribute data in the first registry 714 are involved in the process 500 when carried out for the first data communication system 104. Likewise, the second registry 716 comprises a second data structure (not shown separately) with one or more of reference identifiers and one or more of reference attribute data. Each respective one of the reference attribute data in the second registry 716 is related to a respective one of the reference identifiers in the second registry 716. The reference identifiers and the reference attribute data in the second registry 716 are involved in the process 500 when carried out for the third data communication system 704. Likewise, the third registry 718 comprises a third data structure (not shown separately) with one or more of reference identifiers and one or more of reference attribute data. Each respective one of the reference attribute data in the third registry 718 is related to a respective one of the reference identifiers in the third registry 718. The reference identifiers and the reference attribute data in the third registry 718 are involved in the process 500 when carried out for the fourth data communication system 706. Likewise, the fourth registry 720 comprises a fourth data structure (not shown separately) with one or more of reference identifiers and one or more of reference attribute data. Each respective one of the reference attribute data in the fourth registry 720 is related to a respective one of the reference identifiers in the fourth registry 720. The reference identifiers and the reference attribute data in the fourth registry 720 are involved in the process 500 when carried out for the fifth data communication system 708. The second data processing system 710 determines the declared identifier, the specific node attribute data, and uses the information stored in the relevant one of the first registry 714, the second registry 716, the third registry 718 and the fourth registry 720 to determine if there is a discrepancy, as explained above in a data communication session received by the relevant one of the first data communication system 104, the third data communication system 704, the fourth data communication system 706 and the fifth data communication system 708.

The second data processing system 710 may have been configured for carrying out the process 500 of the diagram of Fig.5 by means of installing second control software 722 with instructions specific to the process 500.

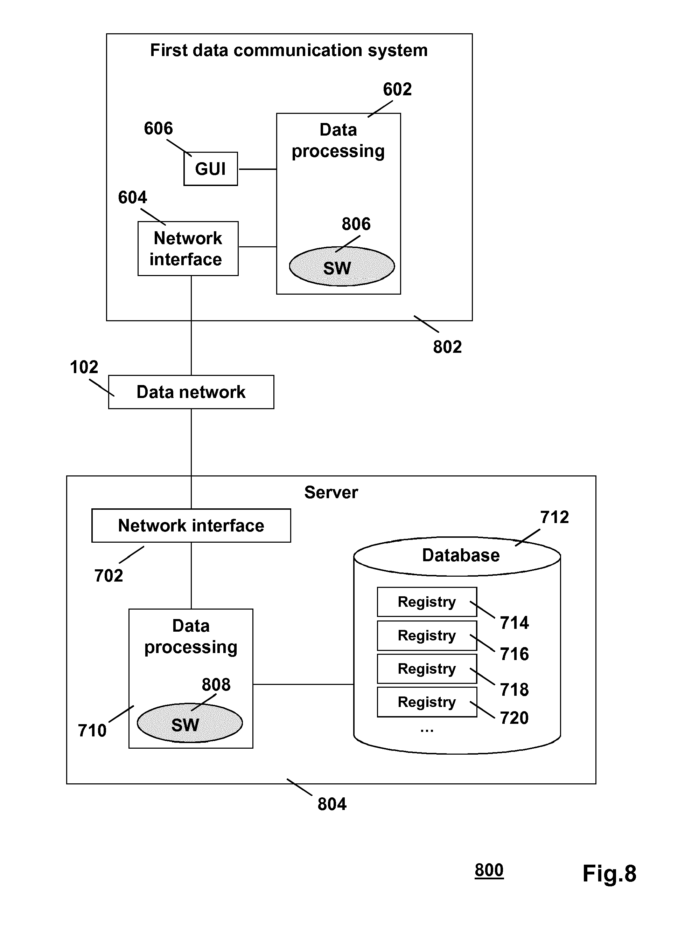

Fig.8 is a diagram of a hybrid system 800 wherein the carrying out of a method according to the invention is distributed between a further embodiment 802 of the first data communication system 104 and a further server 804. In contrast, the server 700 in the diagram of Fig.7 carries out a method according to the invention as a result of the fact that any data communication to or from the first data communication system 104 via the data network 102 always goes via the server 700. Operation of the hybrid system 800 is as follows.

The further embodiment 802 of the first data communication system 104 receives a plurality of data packets from the second data communication system 106 via the data network 102. One or more of the data packets have been marked with specific node attribute data indicative of one or more specific nodes 108, 110, ..., 132 of the data network 102 on a path of the data packets across the data network 102 from the second data communication system 106 to the further embodiment 802 of the first data communication system 104. The further embodiment 802 of the first data communication system 102 determines the declared identifier as contained in the data packets received from the second data communication system 106. Thereafter, the further embodiment 802 of the first data communication system 104 submits the declared identifier via the data network 102 to the further server 804. The submission is implemented, for example, by the further embodiment 802 of the first data communication system 104sending a message to the further server 804. The message contains the declared identifier as extracted by the further embodiment 802 of the first data communication system from the data packets received from the second data communication system 106. The message also includes an identifier of the further embodiment 802 of the first data communication system 104. Alternatively, the submission is implemented by means of the further embodiment 802 of the first data communication system 104 forwarding one or more of the data packets, as received from the second data communication system 106, to the further server 804. The thus forwarded data packets include the declared identifier of the second data communication system 106, as well as the identifier of the further embodiment 802 of the first data communication system 104. The further server 804 maintains the database 712, as discussed above with reference to the server 700 of Fig.7. Upon receipt of the forwarded data packets, the further server 804 uses the identifier of the further embodiment 802 of the first data communication system 104 to access the registry 714, associated with the further embodiment 802 of the first data communication system 104. The further server 804 processes the declared identifier and determines whether or not there is a correlation between the declared identifier and a reference identifier registered with the server in advance.

If there is a correlation according to the further server 804, the further server 804 will need the specific node attribute data in order to determine whether or not a discrepancy exists between the specific node attribute data and reference attribute data, associated with the reference identifier and registered in advance in the registry 714.

If the further embodiment 802 of the first data communication system 104 itself extracted the declared identifier and submitted a message with the declared identifier to the further server 804, the further server 804 will request the further embodiment 802 of the first data communication system 104 to submit to the further server 804 the specific node attribute data of the data packets as received from the second data communication system 106. The further embodiment 802 of the first data communication system 104 may have extracted the specific node attribute data already in preparation of the request, or the further embodiment 802 of the first data communication system 104 may extract the specific node attribute data upon receipt of the request. The further embodiment 802 of the first data communication system 104 then submits the extracted specific node attribute data to the further server 804. Alternatively, the further embodiment 802 of the first data communication system 104 extracts the declared identifier as well as the specific node attribute data upon receipt of the data packets from the second data communication system 106, and submits the declared identifier together with the specific node attribute data to the further server 804 right away.

If the further server 804 has received the specific node attribute data, the further server 804 then determines whether or not there is a discrepancy between the specific node attribute data and reference attribute data, associated with the reference identifier and registered in advance with the server. If there is a discrepancy, the further server 804 will send an alert to the further embodiment 802 of the first data communication system 104.

Alternatively, if the further embodiment 802 of the first data communication system 104 has forwarded to the further server 804 one or more of the data packets, received from the second data communication system 106, the further server 804 has also received the specific node attribute data as embedded in the forwarded data packets. The further server 804 then extracts the specific node attribute data from the forwarded data packets and determines if there is a discrepancy between the specific node attribute data and the reference attribute data. If there is a discrepancy, the further server 804 will send an alert to the further embodiment 802 of the first data communication system 104.

In the hybrid system 800, the above functionality of the further embodiment 802 of the first data communication system 104 can be implemented by means of installing third control software 806 on the first data processing system 602 with instructions to control the operations as carried out by the further embodiment 802 of the first data communication system 104, as specified above. In the hybrid system 800, the above functionality of the further server 804 can likewise be implemented by means of installing fourth control software 808 on the second data processing system 710 to control the operations carried out by the further server 804, as specified above.

The third control software comprises: thirteenth instructions for determining a declared identifier of at least a certain one of the data packets from the second data communication system for identifying the second data communication system as declared; fourteenth instructions for submitting the declared identifier via the data network to the further server 804 for having the further server determine whether or not there is a correlation between the declared identifier and a reference identifier registered with the server in advance; fifteenth instructions for submitting to the further server 804 via the data network 102 the specific node attribute data of the particular data packet for having the further server 804 determine if there is a discrepancy between the specific node attribute data and the reference attribute data; and sixteenth instructions for receiving an alert from the further server 804 if the discrepancy is present.

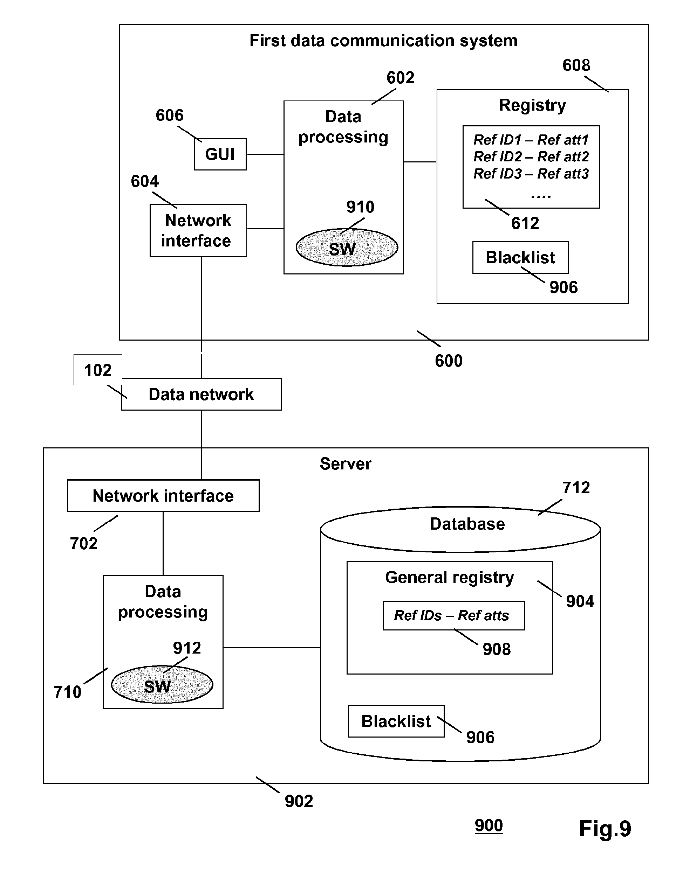

Fig.9 is a diagram of a further hybrid system 900. The further hybrid system 900 combines feature of the embodiment 600 of the first data communication system 104 as discussed above with reference to the diagram of Fig.6, features of the further embodiment 802 of the first data communication system 104, as discussed above with reference to Fig.8, and features of the server 804, as discussed above with reference to Fig.8. The further hybrid system 900, as illustrated, comprises the embodiment 600 of the first data communication system 104 and another server 902. The further hybrid system 900 carries out a method of the invention in multiple stages as follows.

Upon receipt of the data packets from the second data communication system 106, the embodiment 600 of the first data communication system 104 carries out the operations as specified above with reference to the diagram of Fig.6.

If the embodiment 600 of the first data communication system 104 has a reference identifier in the registry 608 that is suitable for a meaningful comparison to the declared identifier, the embodiment 600 of the first data communication system 104 carries out a method of the invention.

On the other hand, if the embodiment 600 of the first data communication system 104 determines that it does not have a suitable reference identifier in the registry 608, the embodiment 600 of the first data communication system 104 submits to the other server 902 the declared identifier and the specific node attribute data, or the declared identifier directly and the specific node attribute data when requested by the other server 902, or forwards to the other server 902 the data packets as received from the second data communication system 106.

The other server 902 has a general registry 904 and a blacklist 906. The general registry 904 comprises another data structure 908 with reference identifiers and associated reference attribute data of bona fide sources. The blacklist 906 comprises declared identifiers and associated specific node attribute data of other sources that gave rise to discrepancies in the past.

Upon receipt of the declared identifier, as submitted by the embodiment 600 of the first data communication system 104, the other server 902 determines whether or not there is a correlation between the declared identifier and a reference identifier registered in advance in the general registry 904. If there is no correlation according to the other server 902, the other server 902 may submit a message to the embodiment 600 of the first data communication system 104 that a correlation has not been found.

Alternatively, the other server 902 may consult one or more still other servers (not shown). For example, the still other servers are owned by other service providers and provide services to other data communication systems (not shown) similar to the service provided by the other server 902 to the embodiment 600 of the first data communication system 104. As another example, the still other servers comprise databases maintained by, e.g., law enforcement agencies such as Interpol, or Internet security firms, that list declared identifiers of, and other information about, sources identified in the past as being false.

If there is no correlation according to the still other servers, the other server 902 gets notified of this and the other server 902 may then, in turn, submit a message to the embodiment 600 of the first data communication system 104 that a correlation has not been found. If it is determined that there is a correlation, the other server 902 starts with determining if there is a discrepancy between the specific node attribute data and the reference attribute data. The reference attribute data as used is present in the other data structure 908 of the general registry 904 if the reference identifier as used was present in the other data structure 908. Otherwise, the reference attributed data is obtained from the still other servers that produced the reference identifier that was unavailable from the general registry 904 before.

If there is no discrepancy according to the other server 902, the other server 902 notifies the embodiment 600 of the first data communication system 104 of the fact that the other server 902 was not able to detect a discrepancy. The embodiment 600 of the first data communication system 104 may then update its registry 608 by adding to the data structure 612 the declared identifier, now as a new reference identifier, and by adding the specific node attribute data, now as new reference attribute data associated with the new reference identifier.

If the other server 902 obtained the reference identifier and the associated reference attribute data from the still other servers, the other server 902 may then likewise update the general registry 904 by storing the reference identifier and the associated reference attribute data in the other data structure 908.

If the other server 902 determines that there is a discrepancy between the specific node attribute data and the reference attribute data, the other server 902 issues an alert to the embodiment 600 of the first data communication system 104. The other server 902 may list the declared identifier, and optionally the specific node attribute data, in the blacklist 906. The other server 902 may also notify the still other servers of the fact that a discrepancy has been found for the currently processed declared identifier. The still other servers may then update their own blacklists or modify their own data structure by moving a reference identifier and the associated reference attribute data to their blacklist of confirmed sources of discrepancies.

Consider a scenario, wherein the specific node attribute data associated with the declared identifier comprises an indication of a topology of the path of the data packet across the data network from the second data communication system 106 to the first data communication system 104. The reference attribute data, against which the specific node attribute data is to be matched, may then need to be converted, if the reference attribute data has been obtained from data packets from the second data communication system 106 to a further data communication system other than the first data communication system 104. For example, if the first data communication system 104 and the further data communication system are resident in the same geographical region, or in the same topological region when mapped onto the topology of the data network 102, the path of the data packets to the first data communication system and the further path of the further data packets to the further data communication system may be comparable for the purpose of determining a discrepancy. On the other hand, if the first data communication system 104 and the further data communication system are resident in different geographic regions or different topological regions, only a part of the path and another part of the further path may be comparable for the purpose of determining a discrepancy.

In the further hybrid system 900, the above functionality of the embodiment 600 of the first data communication system 104 can be implemented by means of installing fifth control software 910 on the first data processing system 602 with instructions to control the operations as carried out by the embodiment 600 of the first data communication system 104, as specified above. In the further hybrid system 900, the above functionality of the other server 902 can likewise be implemented by means of installing sixth control software 912 on the second data processing system 710 to control the operations carried out by the other server 902, as specified above.

## Claims

1. A method (500) of providing a service to an end-user of a first data communication system (104), wherein:
the first data communication system is configured for receiving (504) a plurality of data packets from a second data communication system (106) in a data communication session via a data network (102);
at least a particular one of the plurality of data packets has been marked with specific node attribute data indicative of at least a specific one of one or more nodes (108, 110, ..., 132) of the data network on a path of the particular data packet across the data network from the second data communication system to the first data communication system;
the method comprises:
determining (508) whether or not there is a correlation between, on the one hand, a declared identifier in at least a certain one of the data packets from the second data communication system and declared for identifying the second data communication system and, on the other hand, a reference identifier registered in advance;
if there is a correlation, determining (520) if there is a discrepancy between, on the one hand, the specific node attribute data of the particular data packet and, on the other hand, reference attribute data; and
issuing (522) an alert if the discrepancy is present.

2. The method of claim 1, wherein:
the specific node attribute data comprises a first indication of a first geographic location associated with the specific node;
the reference attribute data is registered in advance and comprises a second indication of one or more second geographic location associated with a further data communication system registered as associated with the reference identifier;
the determining of the discrepancy comprises determining if the first geographic location, on the one hand, and the one or more second geographic locations, on the other hand, correlate according to a first predetermined criterion.

3. The method of claim 1, wherein:
the specific node attribute data comprises a third indication of a first time of the day at a specific geographic location of the specific node when the specific node marked the particular data packet;
the reference attribute data comprises a fourth indication of a second time of the day of receipt of the data packet at the first data communication system or at a server receiving the data packet on behalf of the first data communication system;
the determining of the discrepancy comprises determining if the first time of the day correlates with the second time of the day according to a second predetermined criterion.

4. The method of claim 1, wherein:
the specific node attribute data comprises a fifth indication of a first topology of the path;
the reference attribute data is registered in advance and comprises a sixth indication of one or more further topologies of one or more further paths across the data network taken during one or more past data communication session with a further data communication system registered as associated with the reference identifier;
the determining if the discrepancy is present comprises determining if the first topology and the further topology correlate according to a third predetermined criterion.

5. A first data communication system (600), wherein:
the first data communication system is configured for receiving a plurality of data packets from a second data communication system (106) in a data communication session via a data network (102);
at least a particular one of the plurality of data packets has been marked with specific node attribute data indicative of at least a specific one of one or more nodes (108, 110, ..., 132) of the data network on a path of the particular data packet across the data network from the second data communication system to the first data communication system;
the first data communication system is configured for:
determining (508) whether or not there is a correlation between, on the one hand, a declared identifier in at least a certain one of the data packets from the second data communication system and declared for identifying the second data communication system and, on the other hand, a reference identifier registered in advance;
if there is a correlation, determining (520) if there is a discrepancy between the specific node attribute data and reference attribute data; and
issuing (522) an alert if the discrepancy is present

6. First control software (610) on a computer-readable medium and configured for being installed on a data processing system (602) of a first data communication system (600), wherein:
the first data communication system is configured for receiving a plurality of data packets from a second data communication system (106) in a data communication session via a data network (102);
at least a particular one of the plurality of data packets has been marked with specific node attribute data indicative of at least a specific one of one or more nodes (108, 110, ..., 132) of the data network on a path of the particular data packet across the data network from the second data communication system to the first data communication system;
the first control software comprises:
first instructions for determining (506) a declared identifier of at least a certain one of the data packets from the second data communication system for identifying the second data communication system as declared;
second instructions for determining (510) whether or not there is a correlation between the declared identifier and a reference identifier registered in advance;
third instructions for determining the specific node attribute data of the particular data packet;
fourth instructions for determining reference attribute data if there is a correlation;
fifth instructions for determining (520) if there is a discrepancy between the specific node attribute data and the reference attribute data; and
sixth instructions for issuing (522) an alert if the discrepancy is present.

7. A server (700; 804; 902) on a data network (102), wherein:
the server is configured for providing a service to an end-user of a first data communication system (802; 600);
the first data communication system is configured for receiving a plurality of data packets from a second data communication system (106) in a data communication session via the data network;
at least a particular one of the plurality of data packets has been marked with specific node attribute data indicative of at least a specific one of one or more nodes (108, 110, ..., 132) of the data network on a path of the particular data packet across the data network from the second data communication system to the first data communication system;
the server is configured for:
determining (508) whether or not there is a correlation between, on the one hand, a declared identifier in at least a certain one of the data packets from the second data communication system and declared for identifying the second data communication system and, on the other hand, a reference identifier registered in advance;
if there is a correlation, determining (520) if there is a discrepancy between the specific node attribute data and reference attribute data; and
issuing (522) an alert if the discrepancy is present.

8. Second control software (722) on a computer-readable medium and configured for being installed on a server (700; 804; 902) connected to a data network to configure the server for providing a service to an end-user of a first data communication system (802; 600);
the first data communication system is configured for receiving a plurality of data packets from a second data communication system (106) in a data communication session via a data network (102);
at least a particular one of the plurality of data packets has been marked with specific node attribute data indicative of at least a specific one of one or more nodes (108, 110, ..., 132) of the data network on a path of the particular data packet across the data network from the second data communication system to the first data communication system;
the second control software comprises:
seventh instructions for determining (506) a declared identifier of at least a certain one of the data packets from the second data communication system for identifying the second data communication system as declared;
eighth instructions for determining (510) whether or not there is a correlation between the declared identifier and a reference identifier registered in advance;
ninth instructions for determining the specific node attribute data of the particular data packet;
tenth instructions for determining reference attribute data if there is a correlation;
eleventh instructions for determining (520) if there is a discrepancy between the specific node attribute data and the reference attribute data; and
twelfth instructions (522) for issuing an alert if the discrepancy is present.

9. A first data communication system (802), wherein:
the first data communication system is configured for receiving a plurality of data packets from a second data communication system (106) in a data communication session via a data network (102);
at least a particular one of the plurality of data packets has been marked with specific node attribute data indicative of at least a specific one of one or more nodes (108, 110, ..., 132) of the data network on a path of the particular data packet across the data network from the second data communication system to the first data communication system;
the first data communication system is configured for:
determining (506) a declared identifier of at least a certain one of the data packets from the second data communication system for identifying the second data communication system as declared;
submitting the declared identifier via the data network to a predetermined server (804) for having the predetermined server determine (510) whether or not there is a correlation between the declared identifier and a reference identifier registered with the server in advance;
submitting to the predetermined server via the data network the specific node attribute data of the particular data packet for having the server determine (520) if there is a discrepancy between the specific node attribute data and reference attribute data; and
receiving from the predetermined server an alert if the discrepancy is present.

10. Third control software (806) on a computer-readable medium and configured for being installed on a data processing system (602) of a first data communication system (104), wherein:
the first data communication system is configured for receiving a plurality of data packets from a second data communication system (106) in a data communication session via a data network (102);
at least a particular one of the plurality of data packets has been marked with specific node attribute data indicative of at least a specific one of one or more nodes (108, 110, ..., 132) of the data network on a path of the particular data packet across the data network from the second data communication system to the first data communication system;
the first control software comprises:
thirteenth instructions for determining (506) a declared identifier of at least a certain one of the data packets from the second data communication system for identifying the second data communication system as declared;
fourteenth instructions for submitting the declared identifier via the data network to a predetermined server (804) for having the predetermined server determine (510) whether or not there is a correlation between the declared identifier and a reference identifier registered with the server in advance;
fifteenth instructions for submitting to the predetermined server via the data network the specific node attribute data of the particular data packet for having the server determine (520) if there is a discrepancy between the specific node attribute data and reference attribute data; and
sixteenth instructions for receiving an alert from the predetermined server if the discrepancy is present.
